# NEW EUROPEAN PATENT SPECIFICATION

(11) **EP 0 266 996 B2**
(45) Date of publication and mention of the opposition decision: **04.03.1998**
(45) Mention of the grant of the patent: 19.01.1994
(21) Application number: 87309696.0
(22) Date of filing: 03.11.1987
(51) Int. Cl.: H04N 3/233

(54) **Raster correction circuit**
Schaltung zur Rasterkorrektur
Circuit de correction de trame

(30) Priority: 04.11.1986 GB 8626316
(43) Date of publication of application: 11.05.1988
(73) Proprietor: RCA Thomson Licensing Corporation, Princeton, NJ 08540 (US)
(72) Inventor: Haferl, Peter Eduard, CH-8134 Adliswil (CH)
(74) Representative: Powell, Stephen David

(56) References cited:
- EP-A- 0 194 817
- GB-A- 2 150 796
- US-A- 4 182 978
- Abstract of JP-A-60 223 380

## Description

This invention relates to a deflection circuit in which the amplitude of the deflection current may be varied or modulated over a relatively wide range by supplying a modulation current from a terminal of a semiconductor having a high output impedance. Modulation of the deflection current amplitude is desired for such purposes as correction of outside and of inside east-west pincushion distortion.

Typically, a horizontal deflection circuit such as provided in association with a CRT display device comprises an output stage that includes a horizontal deflection winding and a trace capacitance that supplies deflection current to the deflection winding during each trace interval. A retrace capacitance is coupled across the deflection winding during the retrace interval to form a retrace resonant circuit. Energy is replenished during retrace via a flyback transformer.

The heavy loading, or high beam current in a secondary winding of the flyback transformer, that occurs in the course of displaying, for example, each white horizontal strip of a crosshatch pattern represents a heavy load to the flyback transformer during retrace.

In some prior art circuits in which the retrace resonant circuit is coupled via a relatively small modulation inductance of an east-west control circuit to the primary winding of the flyback transformer, the retrace capacitance may be slightly discharged during retrace due to the aforementioned loading. This may result in a discharge current from the trace capacitance into the retrace capacitance through the deflection winding and a slight drop of the voltage across the trace capacitance during the white horizontal strips of the crosshatch pattern. The charge of the trace capacitance is replenished during the retrace intervals associated with the scan lines that display the black picture portion underneath the white crosshatch stripes. This causes a small current in the opposite direction through the deflection winding. The charge and discharge current of the trace capacitance produces a small raster displacement and results in low frequency oscillations modulating the deflection winding trace current. This low frequency modulation may cause each vertical strip of the crosshatch pattern to appear as being of a zig-zag shape, instead of a straight line shape. The zig-zag shape appears in a given vertical strip immediately below the intersection point with a horizontal strip. Such distortions are sometimes referred to by the name "mouseteeth" distortions. They appear, during and just after the times in which high beam current transients occur, because the deflection circuit that represents a low impedance energy flywheel, supplies the transient increase in energy requirement of the ultor circuits. Thus, energy transferred from the deflection circuit to the ultor circuits may tend to cause variations in the deflection winding trace current.

"Mouseteeth" distortions may be reduced in an arrangement such as described in UK Published Application 2150796A, published 3 July 1985, corresponding to U.S. Patent No. 4,634,937, entitled EAST-WEST CORRECTION CIRCUIT, issued to P.E. Haferl on 6 January 1987, that is referred to herein as the Haferl patent, by supplying an E-W modulation current generated by an east-west control circuit via a choke having a high impedance. This choke integrates the horizontal frequency components resulting in a sink current that is substantially a D.C. current that flows from the deflection circuit to the E-W control circuit. Deflection disturbances referred to as "mouseteeth" are avoided because of the loose coupling between the flyback transformer and the deflection winding during the retrace interval. The loose coupling is provided by the choke that provides high frequency isolation of the deflection circuit output stage from the E-W control circuit. Since a suitable choke may be expensive, it may be desirable to reduce the "mouseteeth" distortion without using such choke.

The present invention provides a deflection apparatus with raster distortion correction, comprising: a source of input signal at a frequency that is integrally related to a first deflection frequency; a deflection winding; switching means coupled to said deflection winding, said switching means operating, in accordance with said input signal, at said first deflection frequency for generating scanning current in said deflection winding during a trace interval of each deflection cycle; a deflection retrace capacitance coupled to said deflection winding to form a deflection retrace resonant circuit that produces a first retrace pulse voltage at a retrace frequency during a retrace interval of each deflection cycle; a source of supply voltage; a supply inductance connected to receive said supply voltage and coupled to said switching means for generating a second retrace pulse voltage in said supply inductance said supply inductance being effective to supply to said retrace resonant circuit during said retrace interval a supply current from said source of supply voltage that replenishes energy losses in said retrace resonant circuit; a load circuit at energized by said second retrace pulse voltage in said supply inductance; and a source of a modulation signal; characterized by controllable means, including semiconductor means, responsive to said modulation signal for generating a resonant circuit that is applied to said retrace resonant circuit to modulate said scanning current for providing raster distortion correction, said semiconductor means forming an output impedance for said modulation current that during said retrace interval is sufficiently large to prevent a high frequency coupling between said supply inductance and said retrace resonant circuit during said retrace interval.

In accordance with an aspect of the invention, a deflection circuit output stage, responsive to an input signal at a frequency that is related to a deflection frequency, includes a retrace capacitance that is coupled to a deflection winding to form a retrace resonant circuit during retrace. A supply inductance generates, in accordance with the input signal, a pulse voltage during retrace that is coupled to a load circuit. A control circuit, responsive to a second signal, generates a modulation current at a second frequency that is coupled to the retrace resonant circuit via a semiconductor arrangement having a high output impedance. The high output impedance of the semiconductor arrangement isolates the supply inductance from the retrace resonant circuit to prevent load variation in the load circuit from affecting the retrace resonant circuit.

Color television picture tubes with a large faceplate radius, such as, for example, Philips 45AX picture tube, may require a significantly high amount of inside pincushion correction. The deflection circuit typically includes a deflection transistor switch operating at a deflection rate coupled in parallel with a damper diode arrangement. An inside pincushion correction current generated by an inside pincushion correction circuit that is coupled to a trace capacitor, may, disadvantageously, back-bias the damper diode arrangement during trace.

When the damper diode arrangement includes, for example, a pair of series coupled diodes, it may be desirable to couple the junction terminal between the series coupled diodes to ground via a conductive switch throughout the first half trace so as to clamp, via one of the diodes, the collector voltage of the deflection transistor switch to ground potential.

In accordance with another aspect of the invention, the transistor, mentioned before, that has the high output impedance and that supplies the modulated current during retrace to provide outside distortion correction, is coupled at the junction terminal between the diodes. Such transistor that supplies the modulated current during retrace, operates as a switch that is conductive during trace. Thus, advantageously, it clamps the collector voltage of the deflection transistor switch to a potential that is close to ground potential.

In the accompanying drawings:
FIGURE 1 illustrates a deflection circuit, embodying an aspect of the invention, that includes inside pincushion correction arrangement;
FIGURES 2a-2f illustrate waveforms useful in explaining the circuit of FIGURE 1;
FIGURES 3a-3e illustrate additional waveforms useful in explaining the circuit of FIGURE 1;
FIGURES 4a-4b illustrates waveforms, that occur during retrace, and that are useful in explaining the circuit of FIGURE 1;
FIGURE 5 illustrates a second embodiment of the invention;
FIGURES 6a-6e illustrate waveforms associated with the circuit of FIGURE 5;

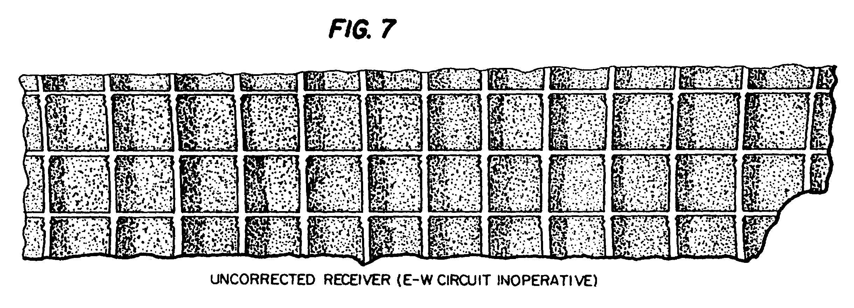

FIGURE 7 illustrates a crosshatch pattern in which "mouseteeth" distortion is uncorrected; and
FIGURE 8 illustrates a portion of a deflection circuit, forming a third embodiment of the invention.

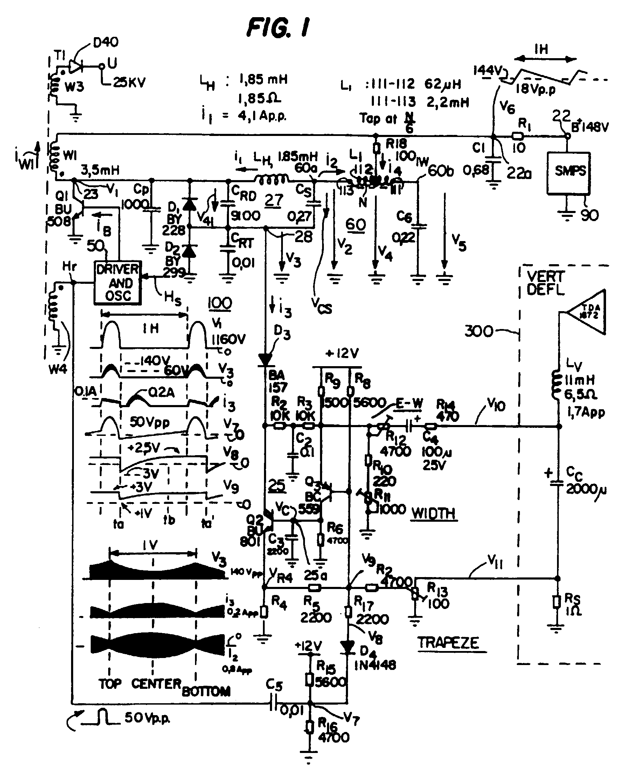

A deflection circuit 100 of FIGURE 1, embodying an aspect of the invention, may provide horizontal deflection of the electron beams in, for example, a Philips 110° 45AX FS color picture tube type A66-EAK00X01. In FIGURE 1, a source of regulated direct current voltage B+, developed between a terminal 22 and ground, is coupled through a small-valued resistor R1 to a terminal 22a of a primary winding W1 of a horizontal flyback transformer T1. The other terminal of winding W1 is coupled to a junction terminal 23. A filtering capacitance C1 is coupled from terminal 22a to ground. Regulated voltage B+ is generated, for example, by a switched mode power supply 90. A secondary winding W3 of transformer T1, supplies an ultor voltage U through a rectifying diode D40.

A horizontal output transistor Q1, operating at a deflection rate f_{H} and having its base coupled to a conventional driver and oscillator circuit 50, has its collector-to-emitter path coupled between junction terminal 23 and ground. Circuit 50 is synchronized by a sync signal Hₛ and by a retrace pulse representative signal Hᵣ, in a well known manner. Paralleling transistor Q1 is the series arrangement of two rectifiers, diodes D₁ and D₂ operating as a damper diode arrangement. Coupled in parallel with the anode and cathode electrodes of diode D₁ is an arrangement of a horizontal deflection winding L_{H} that is coupled to an S-shaping, or trace, capacitance Cₛ. A deflection retrace capacitance CRD, coupled also in parallel with the anode and cathode electrodes of diode D₁, forms with deflection winding L_{H}, a parallel retrace resonant circuit 27. A second retrace capacitance C_{RT} iscoupled between a junction terminal 28 and ground. A small-valued capacitance C_{P} is coupled between terminal 23 and ground. Capacitance C_{P} provides fine tuning of the resonance frequency of retrace resonance circuit 27. Coupled between terminal 28 of deflection winding L_{H}, at the junction between capacitance C_{RT} and capacitance C_{RD}, and ground, is a series arrangement of a diode D₃ and a controllable East-West current source 25 that includes a current sink transistor Q₂ having, at the collector electrode, a high output impedance during retrace. The collector electrode of transistor Q₂ is coupled via a diode D₃ to terminal 28 to provide a modulated sink current i₃ that varies in a vertical rate parabolic manner. Diode D₃ decouples the collector of transistor Q₂ from ground, toward the end of trace, when diode D₂ conducts, to prevent the flow of saturation collector current in transistor Q₂, prior to retrace.

An inside pincushion distortion correction circuit 60 includes an inductance L1 that is coupled to a terminal 60a at the junction of capacitance Cₛ and inductor L_{H}. A capacitor C₆ of circuit 60 is coupled between a terminal 60b and ground.

During the first half of trace, deflection current i₁ flows, in a direction opposing the arrow, in deflection winding L_{H} and in diode D₁. During the second half of trace, deflection current i₁ flows in deflection winding L_{H}, in the direction of the arrow, and in diode D2 and transistor Q1 that is conductive. At the end of trace, transistor Q1 becomes nonconductive and a retrace voltage V₁ is developed between terminal 23 and ground.

During the retrace interval, charge is taken away from retrace capacitance C_{RT} by East-West modulated sink current i₃ that flows via diode D₃. The higher the integral ∫i₃dt, over the entire retrace interval, for example, the larger becomes a retrace voltage V41 across capacitance C_{RD} and the smaller becomes a modulated voltage V₃ across capacitance C_{RT}. The peak of deflection current i₁ through deflection winding L_{H}, during the trace interval, is directly related to the peak of retrace voltage V41 across capacitance C_{RD} at the center of the retrace interval. By modulating current i₃ of transistor Q₂ at a vertical rate, switched current source 25 provides outside pincushion correction to horizontal scanning current i₁. As described later on, the average value of modulation current i₃ during each retrace interval is controlled in such a way that it remains unaffected by retrace voltage V₃. Thus, transistor Q₂ forms, with respect to the average value of current i₃, a high output impedance.

In accordance with an aspect of the invention, the above mentioned high output impedance of transistor Q₂ that is interposed between winding W1 and retrace resonant circuit 27 prevents, during horizontal retrace, an undesirable high frequency coupling through current source 25 between winding W1 of flyback transformer T1 and retrace resonant circuit 27 that, otherwise, could have caused "mouseteeth" distortion. Moreover, the high output impedance of transistor Q₂ prevents any retrace voltage from affecting the collector current in transistor Q₂ that provides East-West modulation. In contrast, in some prior art circuits, "mouseteeth" distortion is prevented by supplying the East-West modulated current, instead of through the high output impedance of the transistor of the present invention, via a choke having a high impedance. The choke, however, disadvantageously, may be expensive. An example of such prior art is described in the Haferl patent that was mentioned before.

Capacitor C_{RT} is coupled to winding W1 via ground and capacitor C₁ to form a second retrace resonant circuit that is coupled to retrace resonant circuit 27 so as to form a combined retrace resonant circuit that includes winding W1, capacitor C_{RT} and retrace resonant circuit 27. The combined retrace resonant circuit is tuned to, for example, the retrace frequency. In order to tune the combined resonant circuit to the retrace frequency, each of retrace resonant circuit 27 and the second retrace resonant circuit that includes winding W1 and capacitor C_{RT} is tuned to a frequency that may be lower than the retrace frequency.

Capacitor C_{RT} causes the retrace voltage across winding W1 and that across deflection winding L_{H} to occur simultaneously. Therefore, retrace voltage Hᵣ across winding W4 that provides synchronization information to Driver and oscillator 50, advantageously, contains the same synchronization information as of the retrace voltage across deflection winding L_{H} or as of voltage V₄₁ across capacitor C_{RD}. The purpose of capacitor C_{RT} is described in detail in the Haferl Patent.

The values of the capacitors C_{P} , C_{RD} and C_{RT} are selected to obtain the correct retrace time and to avoid retrace time modulation of voltage V₁. Capacitor C_{RT} determines the lowest deflection current amplitude that corresponds with current i₃ that is zero.

Except for a short interval that occurs immediately at the beginning of retrace when transistor Q₂ is still in saturation, transistor Q₂ of E-W control circuit 25 of FIGURE 1 operates, during the rest of horizontal retrace interval, as a Class A sink current amplifier. Sink current i₃ in transistor Q₂ develops a proportional feedback voltage V_{R4} across a resistor R₄ that is coupled between the emitter of transistor Q₂ and ground. Voltage V_{R4} is fed back to the base of a transistor Q₃ via a resistor R₅. The collector of transistor Q₃ is coupled to the base of transistor Q₂ at a terminal 25a. The average value of sink current i₃ during retrace, is kept independent from variations of the shape and amplitude of voltage V₃ by, for example, the negative feedback arrangement of resistors R₄ and R₅. Therefore, a high output impedance to the average value of current i₃ at the retrace frequency and above is established at the collector of transistor Q₂. The average value of sink current i₃ is adjusted by a width control resistor R₁₁, which determines the emitter voltage of transistor Q₃, in accordance with a vertical parabola voltage V₁₀, that is described below. Thus, the average value of current i₃ is modulated at a vertical rate in a parabolic manner in accordance with voltage V₁₀.

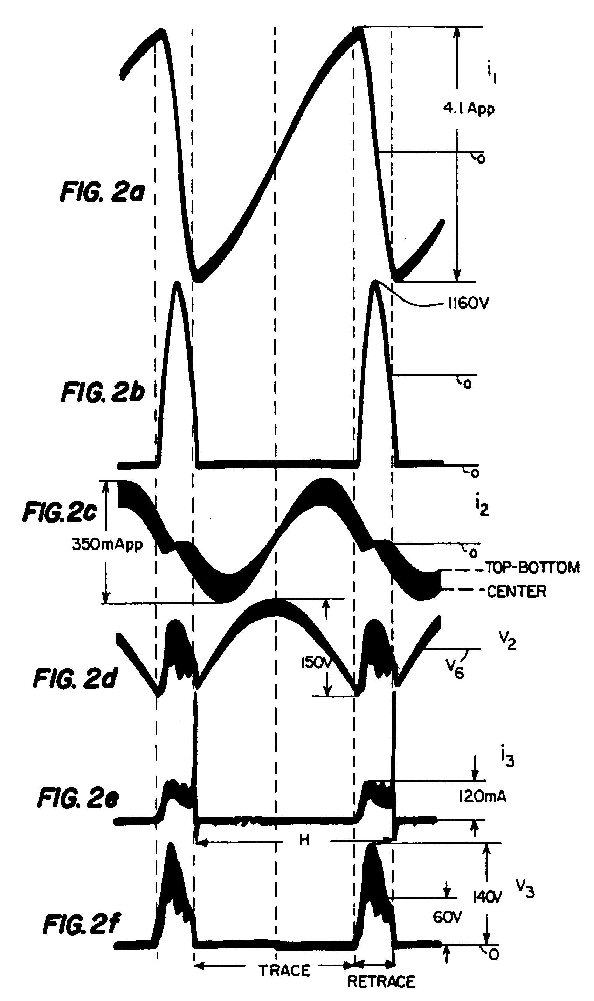

FIGURES 2a-2f, 3a-3e, and 4a-4b illustrate waveforms useful in explaining the operation of the arrangement of FIGURE 1. Similar numbers and symbols in Figures 1, 2a-2f, 3a-3h and 4a-4b indicate similar items or functions.

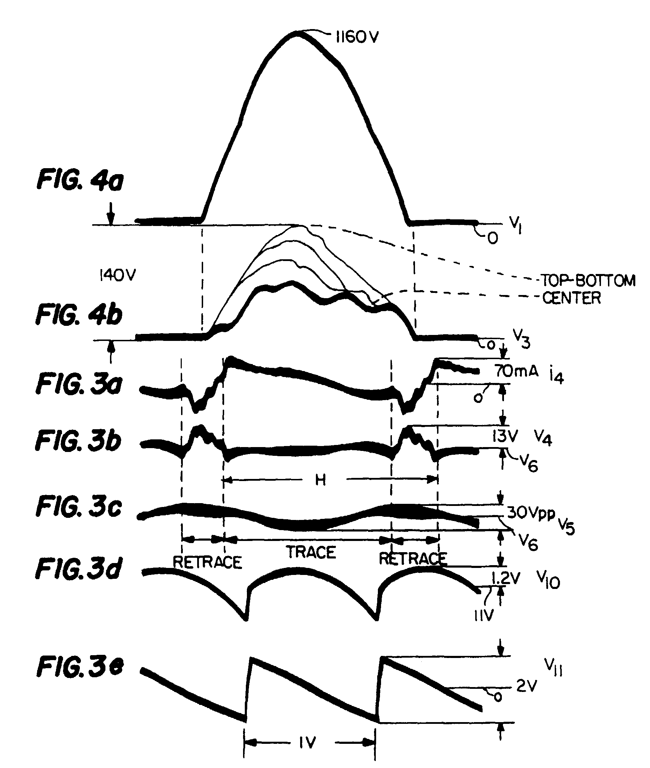

Parabola voltage V₁₀ of FIGURE 1 is generated across a capacitor C_{c} of, for example, a conventional vertical deflection circuit 300. Parabola voltage V₁₀ of FIGURE 3d is AC coupled to the emitter of transistor Q₃ of FIGURE 1 via a DC blocking capacitor C₄, a resistor R₁₄ and an adjustable E-W control resistor R₁₂.

Retrace voltage V₃ is coupled via diode D₃ and a time-integrating network, or lowpass filter that includes a resistor R₂ and a capacitor C₂ that filters out frequencies above the vertical frequency. The lowpass filtered voltage is coupled, via a resistor R₃, to the emitter of transistor Q₃. The low frequency negative feedback voltage that develops across capacitor C₂ causes the average value of voltage V₃ to vary in a vertical rate parabolic manner in accordance with vertical parabola voltage V₁₀. Because of the negative feedback, the peak, for example, of the vertical rate envelope of voltage V₃ is inversely related to the vertical parabola voltage applied across emitter-base junction of transistor Q₃ that is obtained from voltage V₁₀. Such low frequency feedback arrangement of resistors R₂ and R₃ provides DC stabilization and improves linearity.

Also applied to the base of transistor Q₃ is an adjustable portion of a vertical sawtooth voltage V₁₁, that provides trapeze correction, shown in FIGURE 3e, that is obtained across a resistor Rₛ of FIGURE 1. Resistor Rₛ is coupled in series with a vertical deflection winding Lᵥ and capacitor C_{c} of circuit 300.

The downramping slope of current i₃, during retrace, having a waveform that is included in FIGURE 1, is obtained by a low pass filter formed by capacitor C₃ in parallel with a resistor R₆ that are, each, coupled between the base of transistor Q₂ and ground. Negative feedback voltage V_{R4} across resistor R₄ causes the voltage across capacitor C₃ to be higher and to cause a higher level of current i₃ at the beginning of retrace than at the end of retrace. Thus, voltage V_{R4} tends to reduce, gradually, current i₃ via the discharge of capacitor C₃, by action of the negative feedback. Advantageously, the power dissipation of transistor Q₂ is maintained at a low level, such as 2 watts, because at the beginning of retrace, when current i₃ is larger than at the end of retrace, voltage V₃ in the corresponding waveform of FIGURE 1 is still low. Thus, advantageously, the modulation dynamic range of control circuit 25 that is determined by, for example, the average value of current i₃ during retrace, is increased.

High beam load current that flows in a winding W3 of transformer T1 causes a downramping slope of voltage V₃ during the second half of retrace and may add harmonic oscillations to voltage V₃ as shown in FIGURE 2f. The width of retrace pulse voltage V₃ that is determined by the instant when voltage V₃ is clamped by diode D₂ of FIGURE 1 to ground potential also limits the modulation dynamic range. Because sink current i₃ of FIGURE 2e is downramping, during the second half of retrace, the downramping slope of voltage V₃ is, advantageously, less steep, during the second half of retrace, than if current i₃ would have been, for example, at a constant level, during retrace. Thereby, the dynamic range is, advantageously, further increased.

Correction of inside pincushion distortion is accomplished by the "S"-shaping of deflection current i₁, in accordance with an inside pincushion correction modulation current i₂ that flows in capacitance C₆ and in inductor L1 of inside pincushion distortion correction circuit 60. Current i₂ that flows in a current path that includes trace capacitance Cₛ, varies a voltage V_{cs} across trace capacitance Cₛ, during trace, at a frequency that is higher than the trace resonance frequency of the trace resonant circuit that includes deflection winding L_{H} andtrace capacitance Cₛ. The amplitude of current i₂ is modulated by voltage V₃ of FIGURE 2f at terminal 28 of FIGURE 1 to provide inside pincushion correction. The higher the amplitude of current i₂, the higher is the peak-to-peak amplitude of trace voltage V_{cs} that is produced and the more significant is the amount of "S"-shaping of deflection current i₁ that is provided, and vice versa. Operation of circuit 60 is described in more detail in European Published Patent Application No. 0236064, entitled PINCUSHION CORRECTION IN DEFLECTION CIRCUIT, in the name of RCA Corporation, published 9 September 1987.

Capacitance C₆ and inductor L1 of circuit 60 form, with trace capacitance Cₛ and deflection winding L_{H}, a resonance circuit portion of correction circuit 60 during trace. The resonance circuit portion of circuit 60 is tuned by inductor L1 to a frequency that is lower than frequency f_{H} so that current i₂ will not reach zero value prior to the end of horizontal trace; yet, it is tuned to a frequency that is substantially higher than the resonance frequency of the trace resonant circuit of deflection winding L_{H} and trace capacitance Cₛ. Inside pin modulation inductor L1 may be of a variable type if an adjustable amount of correction is required. For the circuit values shown in FIGURE 1, inductor L1 may tune the resonance circuit portion of circuit 60 to a frequency of, for example, 14 KHz.

The portion of voltage V_{cs} that is caused by deflection current i₁ is generally a parabola shaped waveform that, in each horizontal period H, is composed of trace and retrace sinewave portions, respectively. During trace, the corresponding sinewave portion of voltage V_{cs} is at a frequency that is approximately equal to the trace resonance frequency of winding L_{H} and capacitor Cₛ. Such resonance frequency is for example, equal to approximately 7 KHz. During retrace, the corresponding sinewave portion is at approximately 44 KHz.

Inductor L1 and capacitance C₆ are included in a circuit branch that, during trace, is coupled in parallel with trace capacitance Cₛ. During the first half of trace, resonance current i₂ flows, in a direction opposite to the arrow, from ground, through capacitance C₆, inductor L1, capacitance Cₛ, diode D₁, deflection transistor Q1 that is conductive and back to ground. During the second half of trace, current i₂ circulates in the direction of the arrow from ground through diode D₂, capacitance Cₛ, inductor L1 and capacitance C₆ and back to ground.

Deflection current i₁ flows, during retrace, in a current path that includes retrace capacitor CRD, deflection winding L_{H} and trace capacitor Cₛ. Trace capacitor Cₛ, that provides low impedance during retrace, prevents current i₁ from flowing, throughout retrace, in the branch of circuit 60 that includes capacitance C₆ and inductor L1. Because inductor L1 is bypassed by capacitor Cₛ, the deflection inductance during retrace and retrace voltage V₁ are, advantageously, not substantially affected by inductor L1. Therefore, deflection circuit 100 of FIGURE 1 may, advantageously, require a relatively low level of voltage B+ when operating at higher deflection frequencies such as, for example, 2×f_{H}.

During horizontal trace, voltage V₃ of FIGURE 1 is maintained zero as shown in FIGURE 2f. At the center of vertical trace, when current i₃ is at a maximum level, horizontal retrace voltage V₃ is at minimum that may be for example, at zero volts. Consequently, in this case, it is trace voltage V_{cs} across capacitor Cₛ that generates resonant current i₂. Current i₂ of FIGURE 2c, that flows in capacitor Cₛ in the same phase as current i₁ of FIGURE 2a, adds in capacitor Cₛ to current i₁ to provide maximum "S" shaping of voltage V_{cs} when current i₃ is at the maximum. As current i₃ becomes smaller, during vertical trace, horizontal retrace voltage V₃ becomes increasingly larger as shown in the corresponding waveforms in FIGURE 1. The phase of voltage V₃ is shifted by approximately 180° from that of voltage V_{cs}, because the positive peak of voltage V_{cs} or V₂ of FIGURE 2d occurs at the center of horizontal trace; whereas the peak of modulated voltage V₃ of FIGURE 2f occurs during horizontal retrace. Therefore, voltage V₃ of FIGURE 1, which is added to voltage V_{cs} across capacitor Cs to form voltage V₂, has an opposite effect on current i₂ than that of trace voltage V_{cs}. When retrace voltage V₃ increases, current i₂ decreases, causing less modulation of trace voltage V_{cs} or V₂ and less "S" shaping. A further increase of retrace voltage V₃ causes the amplitude of current i₂ to be zero. An even further increase of retrace voltage V₃ causes current i₂ to flow in the opposite direction.

Thus, current i₂ of FIGURE 2c that modulates voltage V₂ of FIGURE 2d is modulated by voltage V₃ of FIGURE 2f. Since voltage V₃ is modulated by current i₃ of FIGURE 2e, the parabolic waveform of voltage V₂ of FIGURE 2d is modulated in the vertical rate by current i₃ of FIGURE 2e to provide inside pincushion distortion correction.

The correction of outside pincushion distortion requires, at the top and bottom of the raster, a lower amplitude of deflection current i₁ of FIGURE 2a than at the center. The correction of inside pincushion distortion requires a lower amount of "S" shaping at the top and bottom than at the center. At the top and bottom sink current i₃ that is lower, causes a higher amplitude of retrace voltage V₃. The higher amplitude of voltage V₃ causes a lower amplitude of current i₂. At the center of the vertical trace, sink current i₃, that is at a maximum, causes the amplitude of retrace voltage V₃ to be at a minimum. Accordingly, at the center of vertical trace, the amplitude of each of deflection current i₁ and inside pincushion correction current i₂ is at a maximum, resulting in more "S" shaping of voltage V_{cs}. Advantageously, by selecting the values of the circuit components of circuit 60, a required amount of inside pincushion correction can be obtained for a given amount of outside pincushion correction.

Circuit 60 is coupled in parallel with capacitor C_{RT} during the retrace interval. Therefore, the value of capacitor C_{RT} has to be larger than if circuit 60 was not used, so as to account for the effect of circuit 60 on the total retrace capacitance that is required. Increasing the value of capacitor C_{RT} has a tendency to increase the coupling between flyback transformer T1 and resonant circuit 27 that may, if not accounted for, disadvantageously, increase "mouseteeth" distortions.

A resistor R18 is coupled between terminal 22a and an intermediate terminal, or tap, 112 of inductor L1. Resistor R18 supplies a DC current i₄ that bypasses deflection winding L_{H} and winding W1. Current i₄ that flows through resistor R18 and inductance L1, advantageously, stabilizes the DC voltage in capacitor Cₛ by providing an additional DC current path between supply voltage V₆ and capacitor Cₛ.

The average DC value of voltage V₂ at junction terminal 60a of winding L_{H} and capacitance Cₛ is equal to voltage V₆ that is at terminal 22a between capacitor C1 and resistor R18. Thus, advantageously, by supplying a portion of the DC current that is required for maintaining average voltage V_{cs,} constant through resistor R18, in addition to the portion that is supplied through winding W1, transient discharge of capacitor Cₛ due to varying ultor load is, advantageously, reduced; hence, "mouseteeth" distortion is reduced.

The AC portions of voltages V₂ of FIGURE 2d and V₅ of FIGURE 3c at the end terminals of inductor L1 have opposite phases. The location of tap 112 of FIGURE 1 is selected in such a way that, advantageously, causes voltage V₄ at tap 112 of inductor L1 of FIGURE 1, that is approximately equal to the average of voltages V₂ and V₅, to have a minimal AC component, during trace, as shown in FIGURE 3b. Consequently, resistor R18 of FIGURE 1, that is coupled to tap 112 does not load significantly any of deflection circuit 100 and inside pincushion correction circuit 60 and, therefore, advantageously, does not increase AC losses in circuits 100 and 60.

Current i₄ of FIGURE 3a that flows in resistor R18 of FIGURE 1 is sawtooth shaped because of the ripple voltage of voltage V₆. Advantageously, current i₄ may correct some of the asymmetrical horizontal linearity errors. Linearity errors occur because of power losses in winding L_{H} and in inductor L1 during trace that might have caused a slight decrease in voltage V₄ at tap 112. The decrease in voltage V₄ might have resulted in currents i₁ and i₂ having smaller amplitudes near the end of horizontal trace. To correct, at least some of such asymmetrical linearity error, current i₄, that is sawtooth shaped, advantageously, reduces the amount of decrease in voltage V₄ that might have, otherwise, occurred.

During the first half of trace, current i₂ flows, in a direction that is opposite to that of the arrow, from ground, through capacitor C₆, inductance L1, and capacitor Cₛ to junction terminal 28 between diodes D₁ and D₂. An energy recovery current i_{w1} flowing through winding W1 of flyback transformer T₁ in a direction of the arrow, keeps diode D₂ conducting as long as current i₂ is smaller than energy recovery current i_{w1} and provides a ground return for current i₂. However, diode D₂ may become nonconductive when the increasing amplitude of current i₂ is equal to the decreasing amplitude of energy recovery current i_{w1} in winding W1. Such situation is undesirable because it may cause the trace voltage at terminal 23 of transistor Q1 to rise significantly above ground potential.

In accordance with a further aspect of the invention, sink current transistor Q₂ is switched into saturation at the beginning of the horizontal trace interval. Advantageously, this provides a current path for inside pincushion modulation current i₂ during the first half of the trace interval. Current i₂ causes voltage V₃, during trace, to increase so as to bias diode D₃ in the forward direction. Because transistor Q₂ is saturated, diode D₃, advantageously, provides a ground return for current i₂ via saturated transistor Q₂ and clamps voltage V₃ to approximately zero volts.

In carrying out a yet further aspect of the invention, transistor Q₂ is switched into saturation by retrace pulse H, across winding W4 that is applied to the base of transistor Q₃ through a capacitor C₅. A waveform shaping network that includes capacitor C₅ and resistors R₁₅ and R₁₆ generates from pulse Hᵣ an upramping voltage V₇, during trace that is shown in the corresponding waveform in FIGURE 1. The negative portion of voltage V₇ is applied to the base of transistor Q₃ via a diode D₄ and a resistor R₁₇ to form a voltage V₉ that causes transistors Q₃ and Q₂ to saturate. The waveform, that is included within FIGURE 1, of voltage V₉ shows the base voltage of transistor Q₃. At a time tₐ in the waveform of voltage V₉ in FIGURE 1, that occurs at the end of retrace, transistors Q₃ and Q₂ are driven into saturation by negative going voltage V₉. Both transistors Q₃ and Q₂ remain in saturation until a time tb, when diode D₄ is reverse biased by upramping voltage V₇. During the interval t_{b}-tₐ', transistor Q₂ is biased for Class A operation so as to provide high output impedance.

FIGURE 2b illustrates the waveform of retrace voltage V₁ at terminal 23 of FIGURE 1. Retrace voltage V₁ of FIGURE 2b is, advantageously, unaffected by modulation of E-W modulation current i₃.

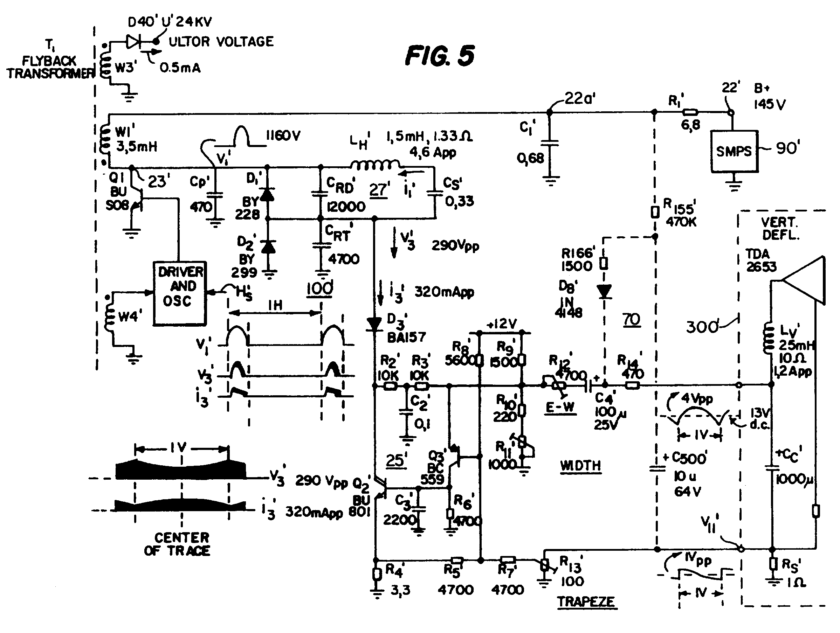

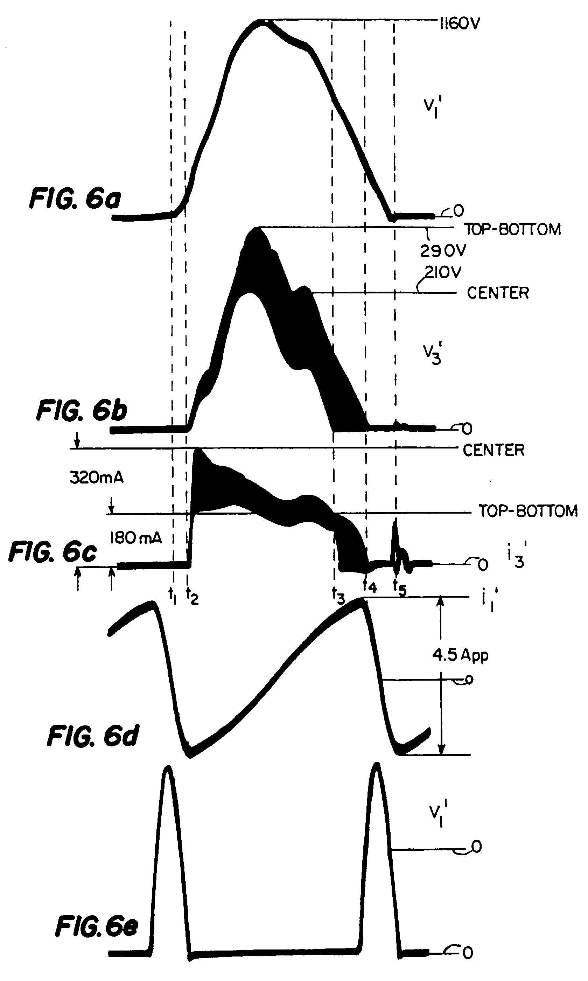

FIGURE 5 illustrates a second embodiment of the invention, referred to as deflection circuit 100', that may provide East-West corrected deflection current i₁' to a Videocolor 110° PIL-FS 10 picture tube type A66EAS00X01. Alternatively, with some changes that are shown in dashed lines, it may be used in conjunction with a picture tube of the 110° COTY SP type. FIGURES 6a-6e illustrate waveforms associated with the circuit of FIGURE 5. Similar numbers and symbols in FIGURES 1, 5 and 6a-6e illustrate similar items or functions. Note that inside pincushion correction circuit 60 of FIGURE 1 is not incorporated in the circuit of FIGURE 5. Transistor Q₂' of FIGURE 5 does not operate as a switch during trace; whereas, transistor Q₂ of FIGURE 1 operates as a switch during trace. In many other respects, deflection circuits 100 of FIGURE 1 and 100' of FIGURE 5 are similar and operate similarly.

FIGURE 6a illustrates voltage V₁' across transistor Q₁' of FIGURE 5. Note that the amplitude and width of voltage V₁' of FIGURE 6a are not affected by the modulation caused by E-W control circuit 25' of FIGURE 5. FIGURE 6b illustrates voltage V₃' modulated by E-W control circuit 25' of FIGURE 5 for obtaining outside pincushion raster correction. The peak retrace voltage across capacitance C_{RD}' is amplitude modulated by the same amount as voltage V₃' of FIGURE 6b. Retrace resonant circuit 27' of FIGURE 5 resonates at the fundamental retrace frequency.

The trailing edge of the pulse of voltage V₃' of FIGURE 6b is modulated by sink current i₃' of FIGURE 5. Thus, pulse of voltage V₃' of FIGURE 6b, such as shown between time t₂ and t₃, is narrower at the center of vertical trace than at the top or bottom. Voltage V₃' of FIGURE 5 is zero during horizontal trace due to conduction of damper diode D₂'. The result is that diode D₃' is reverse biased during this interval.

The amplitude modulation of deflection current i₁' of FIGURE 6d is 7%. Power dissipation of transistor Q₂' of FIGURE 5 is about 2 Watts.

In television applications with picture tubes having nonspherical faceplates, such as, for example, the RCA 110° COTY SP tube, additional vertical parabola shaping may be required so as to flatten the slope of the parabola at the edges. Such parabola shaping arrangement, an arrangement 70, is drawn in FIGURE 5 by dashed lines. The purpose of such arrangement 70 is described in detail in U.S. Patent No. 4,687,972, entitled, RASTER DISTORTION CORRECTION CIRCUITRY FOR A VIDEO DISPLAY APPARATUS, in the name of P.E. Haferl. A capacitor C₅₀₀' of arrangement 70 that is coupled to voltage V₁₁', having a sawtooth waveform at the vertical rate, is charged by a current that flows in a resistor R₁₅₅'. Capacitor C₅₀₀' discharges via a resistor R₁₆₆', a diode D8' and a resistor R₁₄', during the low voltage portion of the vertical parabola voltage. The voltage drop across resistor R₁₄' provides the parabola shaping. The amount of parabola shaping is controlled by the charging current through resistor R₁₅₅'. Capacitor C₅₀₀' operates as an ideal voltage source and, advantageously, provides suppression of the sawtooth voltage.

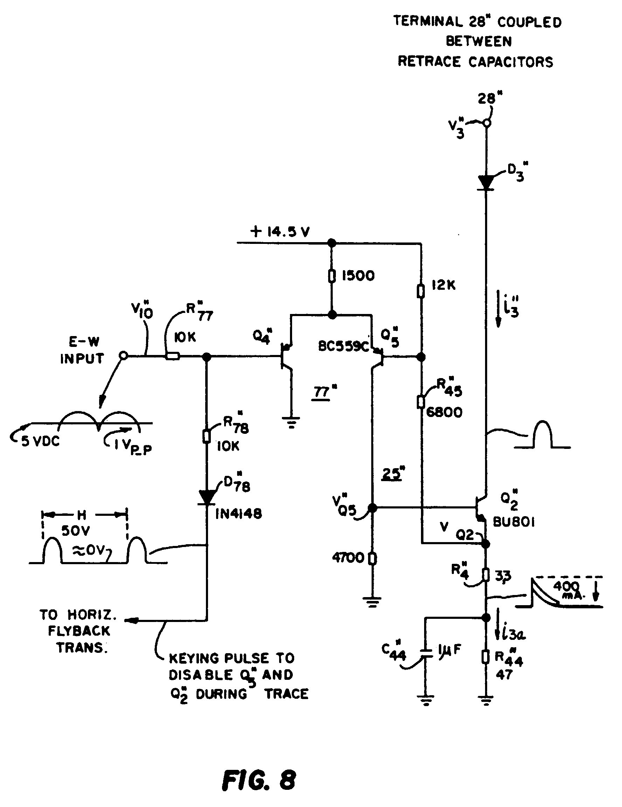

FIGURE 8 illustrates an E-W control circuit 25" that may be used in the arrangement of FIGURE 5, for example, instead of control circuit 25'. Similar numbers and symbols in FIGURES 5 and 8 illustrate similar items or functions. Neither transistor Q₂" of FIGURE 8 nor, as described before, transistor Q₂' of FIGURE 5, operates as a switch during trace.

In control circuit 25' of FIGURE 8, during retrace, a vertical rate parabolic signal V₁₀" is coupled through a resistor R₇₇" to a base electrode of a transistor Q₄" of a temperature compensated differential amplifier 77". The base electrode of transistor Q₄" is also coupled through a resistor R₇₈" and a diode D₇₈" to a terminal of a flyback transformer winding such as, for example, winding W₄' of FIGURE 5. Consequently, throughout trace, the base voltage of transistor Q₄" of FIGURE 8 is clamped to approximately 2.5 volts.

A collector electrode of a transistor Q₅" of amplifier 77" is coupled to the base electrode of a transistor Q₂" to provide a pulse V_{Q5}", during each retrace interval. Pulse V_{Q5}" has a peak voltage that varies in a vertical rate parabolic manner in accordance with signal V₁₀". The emitter electrode of transistor Q₂" is coupled through a resistor R₄" to a parallel arrangement of a resistor R₄₄" and a capacitor C₄₄". An emitter voltage V_{Q2} of transistor Q₂" is representative of a collector current i₃" that flows in transistor Q₂". Voltage V_{Q2} is fed back to the base electrode of transistor Q₅" through a resistor R₄₅" that determines the close-loop gain of amplifier 77". Current i₃" is coupled through a diode D₃" to a terminal 28" of a retrace resonant circuit, not shown in FIGURE 8, to provide East-West modulation current. The operation of transistor Q₂" and of diode D₃" is similar to the operation of transistor Q₂' and of diode D₃' of FIGURE 5, respectively. The negative feedback through resistor R₄₅" of FIGURE 8, establishes the average value of current i₃" during each retrace interval, in accordance with parabolic signal V₁₀". In this way, the average value of current i₃", advantageously, is maintained unaffected by the amplitude of retrace voltage V₃" at terminal 28". Therefore, mouseteeth distortions are, advantageously, reduced.

## Claims

1. A deflection apparatus with raster distortion correction, comprising:
a source of input signal (Hs) at a frequency, that is integrally related to a first deflection frequency;
a deflection winding (L_{H});
switching means (Q1) coupled to said deflection winding, said switching means operating, in accordance with said input
signal, at said first deflection frequency for generating
scanning current (i₁) in said deflection winding during a trace interval of each deflection cycle;
a deflection retrace capacitance (C_{RD}) coupled to said deflection windind (L_{H}) to form a deflection retrace resonant circuit (27) that produces a first retrace pulse voltage at a retrace frequency during a trace interval of each deflection cycle;
a source (90) of supply voltage;
a supply inductance (W1) connected to receive said supply voltage and coupled to said switching means (Q1) for generating a second retrace pulse voltage in said supply inductance (W1), said supply inductance being effective to supply, to said retrace resonant circuit (27) ) during said retrace interval, a supply current from said source (90) of supply voltage that replenishes energy losses in said retrace resonant circuit (27);
a load circuit (at U) energized by said second retrace pulse voltage in said supply inductance (W1);
a source (300) of a modulation signal ; and
controllable means including semi-conductor means (Q2) responsive to said modulation signal for generating a modulation current (i₃) that is applied to said retrace resonant circuit (27) to modulate said scanning current (i₁) for providing raster distcrticn correction;
characterised in that said semi-conductor means (Q2) also forms an output impedance for said modulation current that, during said retrace interval, is sufficiently large to prevent a high frequency coupling between said supply inductance (W1) and said retrace resonant circuit (27) during said retrace interval.

2. An apparatus according to Claim 1 characterized in that said first deflection frequency is a horizontal deflection frequency and wherein said output impedance has a value that is substantially higher at said horizontal deflection frequency, than the value of the impedance of at least one of said deflection winding and said supply inductance.

3. An apparatus according to Claim 1 characterized in that said controllable means (Q2,Q3) comprises an amplifier that maintains an average value of said modulation current (i₃) during said retrace interval unaffected by said first retrace pulse voltage.

4. An apparatus according to Claim 3 characterized in that said amplifier (Q2,Q3) operates as a Class A amplifier.

5. An apparatus according to Claim 1 characterized in that said controllable means (Q2,Q3) forms said output impedance that is high at a collector electrode of a transistor (Q2) for preventing a variation of a load current in said load circuit from affecting said modulation current (i₃).

6. An apparatus according to Claim 1 characterized in that said supply inductance comprises a winding (W1) of a flyback transformer (T1).

7. An apparatus according to Claim 6 characterized in that said load circuit is coupled to a second winding (W3) of said flyback transformer (T1) to produce an ultor voltage (U).

8. An apparatus according to claim 1 characterized by a second retrace capacitance (C_{RT}), coupled between said retrace resonant circuit (27) and a common supply terminal (ground), said second retrace capacitance being effective together with said supply inductance (W1) and said retrace resonant circuit (27) for causing said second retrace pulse voltage to contain the same synchronization information as said first retrace pulse voltage.

9. An apparatus according to claim 1 characterized by a second retrace capacitance (C_{RT}), coupled between said retrace resonant circuit (27) and a common supply terminal (ground), said second retrace capacitance being effective together with said supply inductance (W1) and said retrace resonant circuit (27) to form a second retrace resonant circuit that is tuned to said retrace frequency and that includes said first retrace resonant circuit (27), said supply inductance (W1) and said second retrace capacitance (C_{RT}).

10. An apparatus according to Claim 1 characterized by means (C₄) responsive to said modulation signal and coupled to said controllable means (Q2,Q3) for generating said modulation current having a downramping slope during said retrace interval.

11. An apparatus according to Claim 1 characterized in that said supply inductance comprises a flyback transformer (T1) having a first winding (W1) coupled to said source (90) of supply energy and a high voltage winding (W3) across which is developed said second pulse voltage, wherein said load circuit comprises a high voltage circuit (U) for deriving from said second pulse voltage that is developed across said high voltage winding (W3) an ultor voltage at an ultor terminal and wherein said controllable means (Q2,Q3) includes a transistor (Q2) that prevents variations of beam current loading at said ultor terminal from substantially affecting said retrace resonant circuit (27).

12. An apparatus according to claim 1 characterized in that the signal from said source (300) of modulation signal is at a vertical rate, and said first deflection frequency is at a horizontal rate.

13. An apparatus according to Claim 1 characterized in that said controllable means (Q2,Q3) comprises a transistor (Q2) that is responsive to a signal at a horizontal frequency, said transistor operating as a conductive switch during said trace interval, having a low output impedance relative to the impedance of the deflection and supply windings.

14. An apparatus according to Claim 13 characterised in that said transistor (Q2) operates as a Class A amplifier having said large output impedance relative to the impedance of the deflection and supply windings during said retrace interval, such that said modulation current is supplied via a collector electrode thereof.

15. An apparatus according to Claim 1 characterized by a trace capacitance (Cₛ) coupled to said deflection winding (L_{H}) to form with said deflection winding a first trace resonant circuit during said trace interval such that said scanning current that flows in said trace capacitance develops, during said trace interval, a parabolic voltage in said trace capacitance (Cₛ), and a circuit branch (60) for generating in said circuit branch a second modulation current (i₂) at an amplitude that is modulated in accordance with said modulation current, said second modulation current (i₂) being coupled to said trace capacitance (Cₛ) to vary said parabolic voltage in said trace capacitance in a manner to reduce inside pincushion distortion.

16. An apparatus according to Claim 15 characterized in that said trace capacitance (Cₛ) acts as a low impedance bypass capacitance for said scanning current (i₁) around said circuit branch (60) substantially throughout said retrace interval.

17. An apparatus according to Claim 15 characterized in that said circuit branch (60) comprises a second capacitance (C₆) and a modulation inductance (L₁) that form a second trace resonant circuit with said first trace capacitance (Cₛ) and with said deflection winding (L_{H}) such that said second trace resonant circuit is tuned to a frequency that is higher than the resonance frequency of said first trace resonant circuit.

18. An apparatus according to Claim 15 characterized in that said controllable means (Q2,Q3) comprises a transistor (Q2) that is responsive to a horizontal rate signal that causes said transistor to operate, during said trace interval, as a switch that is conductive.

19. An apparatus according to Claim 1 characterized in that said switching means (Q1) is conductive during at least a first portion of said trace interval to maintain a voltage at a terminal of said switching means at a predetermined substantially constant level during said trace interval and wherein said controllable means (Q2,Q3) comprises a transistor (Q2) that operates as a switch that is conductive during at least a second portion of said trace interval when said switching means (Q1) is nonconductive for maintaining said voltage at said terminal of said switching means at substantially said predetermined constant level throughout said trace interval.

20. An apparatus according to Claim 19 characterized in that said switching means comprises a second transistor (Q1) and an arrangement of a pair of series coupled diodes (D1,D2) that is coupled across the main current carrying terminals of said second transistor (Q1) and wherein said first transistor (Q2) that is conductive during said second portion of said trace interval is coupled at a junction terminal (28) between said diodes (D1,D2) to maintain a low impedance across one of said diodes (D2) when said one of said diodes is nonconductive.

## Patentansprüche

1. Ablenkeinrichtung mit Rasterverzerrungs-Korrektur, enthaltend:
- eine Quelle eines Eingangsignals (H_{S}) mit einer Frequenz die einen ganzzahligen (integrally) Bezug auf eine erste Ablenkfrequenz hat;
- eine Ablenkwicklung (L_{H});
- ein Schaltmittel (Q1), das mit der Ablenkwicklung gekoppelt ist, wobei das Schaltmittel - in Übereinstimmung mit dem Eingangssignal - bei erster Ablenkfrequenz zum Erzeugen eines Abtaststromes (i₁) in der Ablenkwicklung während eines Hinlauf-Intervalls jedes Ablenk-Zyklus arbeitet;
- eine Ablenk-Rücklauf-Kapazität (C_{RD}), die mit der Ablenkwicklung (L_{H}) unter Bildung eines Ablenk-Rücklaufresonanzkreises (27) gekoppelt ist, der eine erste Rücklauf-Pulsspannung mit einer Rücklauf-Frequenz während eines Rücklauf-Intervalls jedes Ablenk-Zyklus erzeugt;
- eine Quelle (90) von Vesorgungsspannung;
- eine Versorgung-Induktivität (W1), die zum Erhalt der Versorgungsspannung angeschlossen und mit dem Schaltmittel (Q1) gekoppelt ist, zur Erzeugung einer zweiten Rücklauf-Pulsspannung in der Versorgungs-Induktivität (W1), die zur Versorgung des Rücklauf-Resonanzkreises (27) während des Rücklauf-Intervalls mit einem Versorgungstrom der Quelle (90) von Versorgungsspannung wirksam ist, die/der Energieverluste in dem Rücklauf-Resonanzkreis (27) ergänzt;
- eine Lastschaltung, (an U), die von der zweiten Rücklauf-Pulsspannung in der Versorgungs-Induktivität (W1) gespeist wird;
- eine Quelle (300) eines Modulationssignals; und
Halbleitermittel (Q2) beinhaltende steuerbare Mittel, die auf das Modulationssignal zur Erzeugung eines Modulations-Stromes (i₃) ansprechen, der and den Rücklauf-Resonanzkreis (27) angelegt wird, um den Abtast-Strom (i₁) unter Erhalt einer Raster-Verzerrungskorrektur zu modulieren, gekennzeichnet dadurch daß das Halbleiter-Mittel (Q2) auch eine Ausgangsimpedanz für den Modulationsstrom bildet, die während des Rücklauf-Intervalls zur Verhinderung einer Hochfrequenz-Kopplung zwischen der Versorgungs-lnduktivität (W1) und dem Rücklauf-Resonanzkreis (27) während des Rücklauf-Intervalls genügend groß ist.

2. Einrichtung nach Anspruch 1,
**dadurch gekennzeichnet,**
daß die erste Ablenkfrequenz eine Horizontal-Ablenkfrequenz ist und worin die Ausgangs-Impedanz einen Wert hat, der wesentlich höher bei der Horizontal-Ablenkfrequenz ist als der Wert der Impedanz von zumindestens der Ablenkwicklung oder der Versorgungs-Induktivität.

3. Einrichtung nach Anspruch 1,
**dadurch gekennzeichnet,**
daß die steuerbaren Mittel (Q2,Q3) einen Verstärker enthalten, der einen Mittelwert des Modulationsstromes (i₃) während des Rücklauf-Intervalls - unbeeinflußt von der ersten Rücklauf-Pulsspannung - aufrechterhält.

4. Einrichtung nach Anspruch 3,
**dadurch gekennzeichnet,**
daß der Verstärker (Q2,Q3) als Verstärker der Klasse A (im A-Betrieb) arbeitet.

5. Einrichtung nach Anspruch 1,
**dadurch gekennzeichnet,**
daß die steuerbaren Mittel (Q2,Q3) die Ausgangs-lmpedanz bilden, die an einer Kollektor-Elektrode eines Transistors (Q2) hoch ist, um zu verhindern, daß eine Schwankung eines Laststroms in der Lastschaltung den Modulationsstrom (i₃) beeinflußt.

6. Einrichtung nach Anspruch 1,
**dadurch gekennzeichnet,**
daß die Versorgungs-Induktivität eine Wicklung (W1) eines Rücklauf- oder Sperrwandler-Übertragers (T1) enthält.

7. Einrichtung nach Anspruch 6,
**dadurch gekennzeichnet,**
daß die Lastschaltung an eine zweite Wicklung (W3) des Rücklauf- oder Speprrwandler-Transformators (T1) zur Erzeugung einer Endanoden-Spannung (U) gekoppelt ist.

8. Einrichtung nach Anspruch 1,
**gekennzeichnet durch**
eine zweite Rücklauf-Kapazität (C_{RT}), die zwischen den Rücklauf-Resonanzkreis (27) und einen gemeinsamen Versorgungsanschluß (Masse) gekoppelt ist, wobei die zweite Rücklauf-Kapazität zusammen mit der Versorgungs-Induktivität (W1) und dem Rücklauf-Resonanzkreis (27) wirksam ist, um dafür zu sorgen, daß die zweite Rücklauf-Pulsspannung dieselbe Synchron-Information wie die erste Rücklauf-Pulsspannung enthält.

9. Einrichtung nach Anspruch 1,
**gekennzeichnet durch**
eine zweite Rücklauf-Kapazität (C_{RT}), die zwischen den Rücklauf-Resonanzkreis (27) und einen gemeinsamen Versorgungsanschluß (Masse) gekoppelt ist, wobei die zweite Rücklauf-Kapazität zusammen mit der Versorgungs-Induktivität (W1) und dem Rücklauf-Resonanzkreis (27) wirksam ist, um einen zweiten Rücklauf-Resonanzkreis zu bilden, der auf die Rücklauf-Frequenz abgestimmt ist und der den ersten Rücklauf-Resonanzkreis (27), die Versorgungs-Induktivität (W1) und die zweite Rücklauf-Kapazität (C_{RT}) einschließt.

10. Einrichtung nach Anspruch 1,
**gekennzeichnet durch**
ein auf das Modulationssignal ansprechendes Mittel (C₄), das mit den steuerbaren Mitteln (Q2,Q3) gekoppelt ist, zum Erzeugen des Modulationsstromes mit einer abwärts geneigten Steigung während des Rücklauf-Intervalls.

11. Einrichtung nach Anspruch 1,
**dadurch gekennzeichnet,**
daß die Versorgungsinduktivität einen Sperrwandler-Übertrager (T1) mit einer ersten mit der Quelle (90) von Versorgungsenergie gekoppelten Wicklung und einer Hochspannungs-Wicklung (W3) über/an der die zweite Pulsspannung gebildet wird, worin der Lastkreis eine Hochspannungs-Schaltung (U) zum Bilden einer Endanoden-Spannung an einem Endanoden-Anschluß aus der zweiten Pulsspannung, die an der Hochspannungs-Wicklung (W3) gebildet wird, und wobei die steuerbaren Mittel (Q2, Q3) einen Transistor (Q2) beinhalten, der Schwankungen der Strahlstrom-Belastung an dem Endanoden-Anschluß daran hindert, die Rücklauf-Resonanzschaltung (27) wesentlich zu beeinflussen.

12. Einrichtung nach Anspruch 1,
**dadurch gekennzeichnet,**
daß das Signal von der Quelle (300) des Modulationssignales mit Vertikalrate und die erste Ablenk-Frequenz mit Horizontalrate vorliegt.

13. Einrichtung nach Anspruch 1,
**dadurch gekennzeichnet,**
daß die steuerbaren Mittel (Q2,Q3) einen Transistor (Q2) beinhalten, der auf ein Signal mit Horizontal-Frequenz anspricht, wobei er als leitender Schalter während des Hinlauf-Intervalls arbeitet, der eine geringe Ausgangs-Impedanz bezogen auf die Impedanz der Ablenk- und Versorgungs-Wicklung hat.

14. Einrichtung nach Anspruch 13,
**dadurch gekennzeichnet,**
daß der Transistor (Q2) als Verstärker im A-Betrieb mit der hohen Ausgangs-Impedanz relativ zu der Impedanz der Ablenk- und Versorgungs-Wicklung(en) während des Rücklauf-Intervalls so arbeitet, daß der Modulationsstrom über seine Kollektor-Elektrode geliefert wird.

15. Einrichtung nach Anspruch 1,
**gekennzeichnet durch**
eine Hinlauf-Kapazität (Cₛ), die mit der Ablenk-Wicklung (L_{H}) gekoppelt ist, zum Bilden eines ersten Hinlauf-Resonanzkreises während des Hinlauf-Intervalls mit der Ablenk-Wicklung so, daß der Abtast-Strom, der in der Hinlauf-Kapazität fließt, während des Hinlauf-Intervalls eine Parabelspannung in der Hinlauf-Kapazität (Cₛ) bildet, und einen Schaltungszweig (60) zum Bilden eines zweiten Modulationsstromes (i₂) in dem Schaltungszweig mit einer Amplitude, die in Übereinstimmung mit dem Modulationsstrom moduliert ist, wobei der zweite Modulationsstrom (i₂) mit der Hinlauf-Kapazität (Cₛ) gekoppelt ist, um die Parabelspannung in der Hinlauf-Kapazität so zu variieren, daß innere Kissenverzerrung reduziert wird.

16. Einrichtung nach Anspruch 15,
**dadurch gekennzeichnet,**
daß die Hinlauf-Kapazität (Cₛ) für den Abtast-Strom (i₁) als eine Niedrigimpedanz-Bypass-Kapazität um den Schaltungszweig (60) herum, im wesentlichen während des ganzen Rücklauf-Intervalls, wirkt.

17. Einrichtung nach Anspruch 15,
**dadurch gekennzeichnet,**
daß der Schaltungszweig (60) eine zweite Kapazität (C₆) und eine Modulations-Induktivität (L₁) enthält, die einen zweiten Hinlauf-Resonanzkreis mit der ersten Hinlauf-Kapazität (Cₛ) und mit der Anlenk-Wicklung (L_{H}) so bilden, daß der zweite Hinlauf-Resonanzkreis auf eine Frequenz abgestimmt ist, die höher als die Resonanzfrequenz des ersten Hinlauf-Resonanzkreises ist.

18. Einrichtung nach Anspruch 15,
**dadurch gekennzeichnet,**
daß die steuerbaren Mittel (Q2,Q3) einen Transistor (Q2) enthalten, der auf ein Horizontalraten-Signal anspricht, das bewirkt, daß der Transistor während des Hinlauf-Intervalls als ein leitender Schalter arbeitet.

19. Einrichtung nach Anspruch 1,
**dadurch gekennzeichnet,**
- daß das Schaltmittel (Q1) während zumindest eines ersten Teils des Hinlauf-Intervalls leitend ist, um die Spannung an einem Anschluß des Schaltmittels auf einem vorbestimmten im wesentlichen konstanten Pegel während des Hinlauf-Intervalls zu halten und
- daß die steuerbaren Mittel (Q2,Q3) einen Transistor (Q2) enthalten, der als während zumindest eines zweiten Teils des Hinlauf-Intervalls leitender Schalter arbeitet, wenn das Schaltmittel (Q1) zum Aufrechterhalten der Spannung an dem Anschluß des Schaltmittels auf im wesentlichen dem vorbestimmten konstanten Pegel über das ganze Hinlauf-Intervall nichtleitend ist.

20. Einrichtung nach Anspruch 19,
**dadurch gekennzeichnet,**
daß das Schaltmittel einen zweiten Transistor (Q1) und eine Anordnung eines Paares von in Reihe geschalteten Dioden (D1,D2) enthält, das über die Haupt-Stromführungs-Anschlüsse des zweiten Transistors (Q1) gekoppelt ist, und worin der - während des zweiten Teils des Hinlauf-Intervalls leitende - erste Transistor (Q2) an einen Verbindungsanschluß (28) zwischen den Dioden (D1,D2) gekoppelt ist, um eine geringe Impedanz über eine der Dioden (D2) zu halten, wenn die eine der Dioden nichtleitend ist.

## Revendications

1. Dispositif de déviation avec correction de distorsion de trame, comprenant :
une source de signal d'entrée (Hs) à une fréquence qui est intégralement reliée à une première fréquence de déviation ;
un enroulement de déviation (L_{H}) ;
un moyen de commutation (Q1) couplé audit enroulement de déviation, ledit moyen de commutation fonctionnant, en conformité avec ledit signal d'entrée, à ladite première fréquence de déviation pour générer un courant de balayage (i₁) dans ledit enroulement de déviation durant un intervalle de tracé de chaque cycle de déviation ;
une capacité de retour de déviation (C_{RD}) couplée audit enroulement de déviation (L_{H}) pour former un circuit résonant de retour de déviation (27) qui produit une première tension à impulsions de retour à la fréquence de retour durant un intervalle de retour de chaque cycle de déviation ;
une source (90) de tension d'alimentation ;
une inductance d'alimentation (W1) connectée pour recevoir ladite tension d'alimentation et couplée audit moyen de commutation (Q1) pour générer une seconde tension à impulsions de retour dans ladite inductance d'alimentation (W1), ladite inductance d'alimentation ayant pour effet de fournir, audit circuit résonant de retour (27) durant ledit intervalle de retour, un courant d'alimentation issu de ladite source (90) de tension d'alimentation qui régénère les pertes d'énergie dans ledit circuit résonant de retour (27) ;
un circuit de charge (en U) excité par ladite seconde tension à impulsions de retour dans ladite inductance d'alimentation (W1);
une source (300) d'un signal de modulation ; et
un moyen réglable incluant un moyen à semi-conducteur (Q2) sensible audit signal de modulation pour générer un courant de modulation (i₃) qui est appliqué audit circuit résonant de retour (27) pour moduler ledit courant de balayage (i₁) pour fournir une correction de distorsion de trame ;
caractérisé en ce que le moyen à semi-conducteur (Q2) forme aussi une impédance de sortie pour ledit courant de modulation qui, durant ledit intervalle de retour, est suffisamment grand pour éviter un couplage à haute fréquence entre ladite inductance d'alimentation (W1) et ledit circuit résonant de retour (27) durant ledit intervalle de retour.

2. Dispositif selon la revendication 1 caractérisé en ce que ladite première fréquence de déviation est une fréquence de déviation horizontale et dans lequel ladite impédance de sortie a une valeur qui est sensiblement plus élevée à ladite fréquence de déviation horizontale que la valeur de l'impédance d'au moins un dudit enroulement de déviation et de ladite inductance d'alimentation.

3. Dispositif selon la revendication 1 caractérisé en ce que ledit moyen réglable (Q2, Q3) comprend un amplificateur qui maintient une valeur moyenne dudit courant de modulation (i₃) pendant ledit intervalle de retour inaffectée par ladite première tension à impulsions de retour.

4. Dispositif selon la revendication 3 caractérisé en ce que ledit amplificateur (Q2, Q3) fonctionne comme un amplificateur de classe A.

5. Dispositif selon la revendication 1 caractérisé en ce que ledit moyen réglable (Q2, Q3) forme ladite impédance de sortie qui est haute au niveau d'une électrode de collecteur d'un transistor (Q2) pour éviter à une variation du courant de charge dans ledit circuit de charge d'affecter ledit courant de modulation (i₃).

6. Dispositif selon la revendication 1 caractérisé en ce que ladite inductance d'alimentation comprend un enroulement (W1) d'un transformateur de retour (T1).

7. Dispositif selon la revendication 6 caractérisé en ce que ledit circuit de charge est couplé à un second enroulement (W3) dudit transformateur de retour (T1) pour produire une tension d'anode terminale (U).

8. Dispositif selon la revendication 1 caractérisé par une seconde capacité de retour (C_{RT}) couplée entre ledit circuit résonant de retour (27) et une borne d'alimentation commune (terre), ladite seconde capacité de retour étant efficace avec ladite inductance d'alimentation (W1) et ledit circuit résonant de retour (27) pour entrainer ladite seconde tension à impulsions de retour à contenir la même information de synchronisation que ladite première tension à impulsions de retour.

9. Dispositif selon la revendication 1 caractérisé par une seconde capacité de retour (C_{RT}) couplée entre ledit circuit résonant de retour (27) et une borne d'alimentation commune (terre), ladite seconde capacité de retour étant efficace avec ladite inductance d'alimentation (W1) et ledit circuit résonant de retour (27) pour former un second circuit résonant de retour qui est accordé à ladite fréquence de retour et qui inclut ledit premier circuit résonant de retour (27), ladite inductance d'alimentation (W1) et ladite seconde capacité de retour (C_{RT}).

10. Dispositif selon la revendication 1 caractérisé par le moyen (C4) sensible audit signal de modulation et couplé audit moyen réglable (Q2, Q3) pour générer ledit courant de modulation comportant une pente décroissante pendant ledit intervalle de retour.

11. Dispositif selon la revendication 1 caractérisé en ce que ladite inductance d'alimentation comprend un transformateur de retour (T1) ayant un premier enroulement (W1) couplé à ladite source (90) d'énergie d'alimentation et un enroulement de haute tension (W3) travers lequel est développé ladite seconde tension à impulsions, dans lequel ledit circuit de charge comprend un circuit de haute tension (U) afin de dériver à partir de ladite seconde tension à impulsions qui est développée à travers ledit enroulement de haute tension (W3), une tension d'anode terminale au niveau d'une borne d'anode et dans lequel ledit moyen réglable (Q2, Q3) inclut un transistor (Q2) qui évite aux variations de charge du courant de faisceau au niveau de ladite borne d'anode d'affecter sensiblement ledit circuit résonant de retour (27).

12. Dispositif selon la revendication 1 caractérisé en ce que le signal issu de ladite source (300) du signal de modulation est à une cadence verticale et ladite première fréquence de déviation est à une cadence horizonrale.

13. Dispositif selon la revendication 1 caractérisé en ce que ledit moyen réglable (Q2, Q3) comprend un transistor (Q2) qui est sensible à un signal à une fréquence horizontale, ledit transistor fonctionnant comme un commutateur passant pendant ledit intervalle de tracé, ayant une faible impédance de sortie par rapport à l'impédance des enroulements de déviation et d'alimentation.

14. Dispositif selon la revendication 13 caractérisé en ce que ledit transistor (Q2) fonctionne comme un amplificateur de classe A ayant ladite impédance de sortie par rapport à l'impédance des enroulements de déviation et d'alimentation pendant ledit intervalle de retour de telle sorte que ledit courant de modulation est fourni via son électrode de collecteur.

15. Dispositif selon la revendication 1 caractérisé par une capacité de tracé (Cₛ) couplée audit enroulement de déviation (L_{H}) pour former avec ledit enroulement de déviation un premier circuit résonant de tracé pendant ledit intervalle de tracé de telle sorte que ledit courant de balayage qui circule dans ladite capacité de tracé développe, pendant ledit intervalle de tracé, une tension parabolique dans ladite capacité de tracé (Cₛ), et une branche de circuit (60) pour générer dans ladite branche de circuit un second courant de modulation (i₂) à une amplitude qui est modulée en conformité avec ledit courant de modulation, ledit second courant de modulation (i₂) étant couplé à ladite capacité de tracé (Cₛ) pour faire varier ladite tension parabolique dans ladite capacité de tracé de façon à réduire la distorsion en coussin intérieur.

16. Dispositif selon la revendication 15 caractérisé en ce que ladite capacité de tracé (Cₛ) agit comme une capacité de dérivation de faible impédance pour ledit courant de balayage (i₁) autour de ladite branche de circuit (60) sensiblement tout au long dudit intervalle de retour.

17. Dispositif selon la revendication 15 caractérisé en ce que ladite branche de circuit (60) comprend une seconde capacité (C6) et une inductance de modulation (L₁) qui forment un second circuit résonant de tracé avec ladite première capacité de tracé (Cₛ) et avec ledit enroulement de déviation (L_{H}) de telle sorte que ledit second circuit résonant de tracé soit accordé à une fréquence qui est suprieure à la fréquence de résonance dudit premier circuit résonant de tracé.

18. Dispositif selon la revendication 15 caractérisé en ce que ledit moyen réglable (Q2, Q3) comprend un transistor (Q2) qui est sensible à un signal de cadence horizontale qui entraine ledit transistor à fonctionner, pendant ledit intervalle de tracé, comme un commutateur qui est passant.

19. Dispositif selon la revendication 1 caractérisé en ce que ledit moyen de commutation (Q1) est conducteur pendant au moins une première partie dudit intervalle de tracé pour maintenir une tension à une borne dudit moyen de commutation à un niveau prédéterminé sensiblement constant pendant ledit intervalle de tracé et dans lequel ledit moyen réglable (Q2, Q3) comprend un transistor (Q2) qui fonctionne comme un commutateur passant pendant au moins une seconde partie dudit intervalle de tracé lorsque ledit moyen de commutation (Q1) n'est pas conducteur pour maintenir ladite tension à ladite borne dudit moyen de commutation audit niveau prédéterminé sensiblement constant tout au long dudit intervalle de tracé.

20. Dispositif selon la revendication 19 caractérisé en ce que ledit moyen de commutation comprend un second transistor (Q1) et un agencement d'une paire de diodes couplées en série (D1, D2) qui est couplé à travers les bornes supportant le courant d'alimentation dudit second transistor (Q1) et dans lequel ledit premier transistor (Q2) qui est conducteur pendant ladite seconde partie dudit intervalle de tracé, est couplé à une borne de jonction (28) entre lesdites diodes (D1, D2) pour maintenir une faible impédance à travers une desdites diodes (D2) lorsque cette diode desdites diodes n'est pas conductrice.
